# EUROPÄISCHE PATENTSCHRIFT

(11) **EP 2 377 301 B1**
(45) Veröffentlichungstag und Bekanntmachung des Hinweises auf die Patenterteilung: **24.04.2013**
(21) Anmeldenummer: 09775106.9
(22) Anmeldetag: 08.12.2009
(51) Int. Cl.: H04M 3/533, H04M 3/537, H04M 3/42

(54) **VERFAHREN UND VORRICHTUNG ZUM INTELLIGENTEN ZUSAMMENSTELLEN EINER MULTIMEDIANACHRICHT FÜR EIN MOBILFUNKSYSTEM**
METHOD AND DEVICE FOR INTELLIGENT COMPOSITION OF A MULTIMEDIA MESSAGE FOR A MOBILE RADIO SYSTEM
PROCÉDÉ ET DISPOSITIF DE COMPOSITION INTELLIGENTE D'UN MESSAGE MULTIMÉDIA POUR UN SYSTÈME RADIO MOBILE

(30) Priorität: 15.12.2008 DE 102008062300
(43) Veröffentlichungstag der Anmeldung: 19.10.2011
(73) Patentinhaber: Speech Design Gesellschaft für elektronische Sprachverarbeitung mbH, 82110 Germering (DE)
(72) Erfinder: MARTENS, Robert, 25488 Holm (DE); MARTENS, Jan, 22607 Hamburg (DE)
(74) Vertreter: Kuhnen & Wacker
(86) Internationale Anmeldenummer: PCT/EP2009/008770
(87) Internationale Veröffentlichungsnummer: WO 2010/072328

(56) Entgegenhaltungen:
- WO-A1-2004/054220
- WO-A1-2008/084207
- WO-A2-2004/095422

## Beschreibung

Die vorliegende Erfindung betrifft ein Verfahren sowie eine Vorrichtung zum intelligenten Zusammenstellen einer Multimedianachricht aus unterschiedlichen Multimediainhalten für ein Mobilfunksystem.

Digitale Anrufbeantworter, sogenannte digitale Sprachboxen oder Voicemailboxen, auf denen digitale Sprachnachrichten, im folgenden auch Voicemails genannt, hinterlassen werden können, für den Fall dass der Telefonteilnehmer nicht erreichbar ist, stellen einen der wichtigsten Dienste des modernen Mobilfunks dar. Die digitale Sprachbox ist dabei gewöhnlicherweise eine große Datenbank bei einem Telefonanbieter (Carrier), der die digitalen Sprachnachrichten für den jeweiligen Teilnehmer zentral speichert.

Wenn der mobile Telefonteilnehmer seine Voicemailbox abfragen will, stellt er eine Sprachverbindung zum Carrier her und bekommt von dem Voicemailsystem die jeweiligen Voicemails in der Reihenfolge ihres Eintreffens über die Sprachverbindung abgespielt. Schätzungen besagen, dass fünf bis sechs Prozent des gesamten mobilen Sprachverkehrs für die Abfrage der Voicemailboxen verwendet wird. Da aufgrund des harten Wettbewerbs das Einrichten und Vorhalten einer Voicemailbox in der Regel ein kostenloser Service des Telefonanbieters ist, geht ihm der dafür erzielbare Sprachverkehrsumsatz verloren.

Für den Telefonanbieter hat das bisherige Voicemailsystem weiter den Nachteil, dass er große Datenbanken vorhalten muss, um ausreichend Datenvolumen für die Sprachnachrichten der Teilnehmer zur Verfügung stellen zu können.

Aber auch für den Telefonteilnehmer hat dieses konventionelle Voicemailsystem Nachteile. Da alle Voicemails für einen Teilnehmer in der Reihenfolge ihres Eingangs nach gespeichert werden, muss der Telefonteilnehmer in der Regel auch alle vorhergehenden Voicemails in ihrer Reihenfolge anhören oder zumindest abfragen. Er kann aber nicht gezielt eine gegebenenfalls für ihn eigentlich wichtige Sprachnachricht aus den für ihn gespeicherten Voicemails wählen. Wenn beispielsweise der Teilnehmer einen wichtigen Rückruf erwartet, und er für eine gewisse Zeit nicht erreichbar war, ist es für ihn äußerst umständlich, sich zuerst durch die ganzen Voicemails von anderen, weniger wichtigen Anrufen durchkämpfen zu müssen.

Es besteht daher ein Bedarf an einer grundlegenden Verbesserung des bestehenden Voicemailsystems von Mobilfunkanbietrn. Mit dem Konzept "Voicemail to MMS" ist hierfür ein innovatives neues Konzept für den digitalen Anrufbeantworterdienst gefunden worden, dass die inzwischen enorme Leistungsfähigkeit von modernen Mobilfunkgeräten ausnutzt. Anders als bei dem alten Voicemailsystem werden beim neuen Voicemailsystem die Voicemails im Push-Betrieb an den Telefonteilnehmer weitergeleitet. Das heißt, die empfangenen Voicemails müssen nicht erst durch einen Anruf des Telefonteilnehmers abgerufen werden, sondern werden automatisch nach Eingang vom Telefonanbieter auf das Mobilfunkgerät des Teilnehmers als eine standardisierte Multimedianachricht, beispielsweise im MMS-Format, weitergeleitet, sobald das Mobilfunkgerät empfangsbereit ist. Die als MMS empfangene Voicemail (d.h. die digitale Sprachnachricht vom digitalen Anrufbeantworterdienst) kann dann durch einen internen MMS-Player auf dem Mobilfunkgerät jederzeit wiedergegeben werden.

Da die digitalen Sprachnachrichten bereits in dem Mobilfunkgerät gespeichert sind und nicht erst vom Telefonanbieter auf Anfrage über den Sprachkanal als "Gespräch" übertragen werden, ist es möglich, dass eine Liste von Anrufern auf dem Display des Mobilfunktelefons angezeigt wird. Der Mobilfunkteilnehmer kann dann bequem auf dem Display seines Mobilfunkgerät aus einer angezeigten Liste die für ihn wichtigen Nachrichten auswählen. Wenn die Anrufernummer im Adressbuch des Mobilfunkgeräts gespeichert ist, kann nicht nur die Nummer, sondern gleich der Name des Anrufers gezeigt werden, was die Benutzerfreundlichkeit von "Voicemail to MMS" weiter verbessert.

Für den Telefonanbieter ist hierbei vorteilhaft, dass MMS nicht über einen Sprachkanal, sondern über einen Datenkanal übertragen wird, was die Sprachkanalbelastung senkt. Dadurch wird einerseits die von dem Telefonanbieter erworbene Frequenzbandbreite entlastet und andererseits die bisher eher weniger genutzte Bandbreite für Datenkanäle besser ausgelastet.

Grundsätzlich können aber mit einer MMS nicht nur digitale Sprachnachrichten einer Voicemailbox übertragen werden, sondern ebenso visueller bzw. audio-visuelle Daten, sogenannter Multimediainhalt. "Voicemail to MMS" ermöglicht daher das Versenden von Multimedianachrichten im standardisierten MMS-Format, die digitale Sprachnachrichten und zusätzlich Multimediainhalten, wie etwa Bilder, Präsentationen, Animationen oder Videoclips, enthalten können.

Da moderne Mobilfunkgeräte inzwischen über relativ große Displays mit guter Qualität verfügen und ein Telefonteilnehmer eine digitale Sprachnachricht, die ihm vorgespielt wird, nur abhört, ist ein Telefonteilnehmer der den "Voicemail to MMS" der den digitalen Anrufbeantworterdienst des Telefonanbieters nutzt, in der Lage, die parallel angebotenen visuellen Multimediainhalte wahrzunehmen. Auch audio-visuelle Multimediainhalte sind möglich, solange das Abspielen der Audioinhalte nicht mit der eigentlichen Wiedergabe der digitalen Sprachnachricht zeitlich zusammenfällt.

Damit erschließen sich ganz neue Möglichkeiten zusätzliche visuelle oder audio-visuelle Informationen, die für den Telefonteilnehmer oder Telefonanbieter von Interesse sind, im Rahmen des digitalen Anrufbeantworterdienstes, der per MMS gesendete digitalen Sprachnachrichten verwendet, zu integrieren. Ein mobiler Telefonteilnehmer, der diesen neuen digitalen Anrufbeantworterdienst nutzt, möchte jedoch nicht wahllos mit zusätzlichen Multimediainhalten belästigt werden, sondern wird nur an solchen Multimediainhalten interessiert sein, die ihn persönlich relevante Informationen vermitteln. Umgekehrt ist auch für die Anbieter von Multimediainhalten das intelligente Einbinden von zusätzlichen Multimediainhalten wichtig. Durch den von einem attraktiveren digitalen Anrufbeantworterdienst zusätzlich generierten Datentransfervolumen profitiert letztlich auch der Carrier, der diesen Dienst für sein Mobilfunksystem anbietet.

Angesichts dieser neuen Möglichkeiten stellt sich daher die Aufgabe, wie man gezielt zusätzliche Informationen, die für den Telefonteilnehmer von Interesse sein können, in die MMS mit der digitalen Sprachnachricht integriert.

Das Dokument WO 2008/084 207 offenbart ein Verfahren zum Posten auf einer website.

Diese Aufgabe wird durch das Verfahren und die Vorrichtung gemäß Anspruch 1 und 8 gelöst. Weitere vorteilhafte Ausgestaltungen und Weiterbildungen sind Gegenstand der sich daran anschließenden Unteransprüche.
- Fig. 1: zeigt ein Flussdiagramm, das das grundsätzliche Verfahren gemäß der vorliegenden Erfindung in einem Flussdiagramm darstellt.
- Fig. 2: zeigt eine Vorrichtung gemäß der vorliegenden Erfindung, die das Verfahren der Fig. 1 ausführt.
- Fig. 3: zeigt ein Flussdiagramm, das eine Ausführungsform des Verfahrens gemäß der vorliegenden Erfindung in einem Flussdiagramm darstellt.
- Fig. 4: zeigt ein Diagramm, das eine Vorrichtung zum Ausführen des in Fig. 3 gezeigten Verfahrens darstellt.
- Fig. 5: zeigt ein Flussdiagramm, das eine weitere Ausführungsform des Verfahrens gemäß der vorliegenden Erfindung in einem Flussdiagramm darstellt.
- Fig. 6: zeigt ein Diagramm, das eine Vorrichtung zum Ausführen des in Fig. 5 gezeigten Verfahrens darstellt.

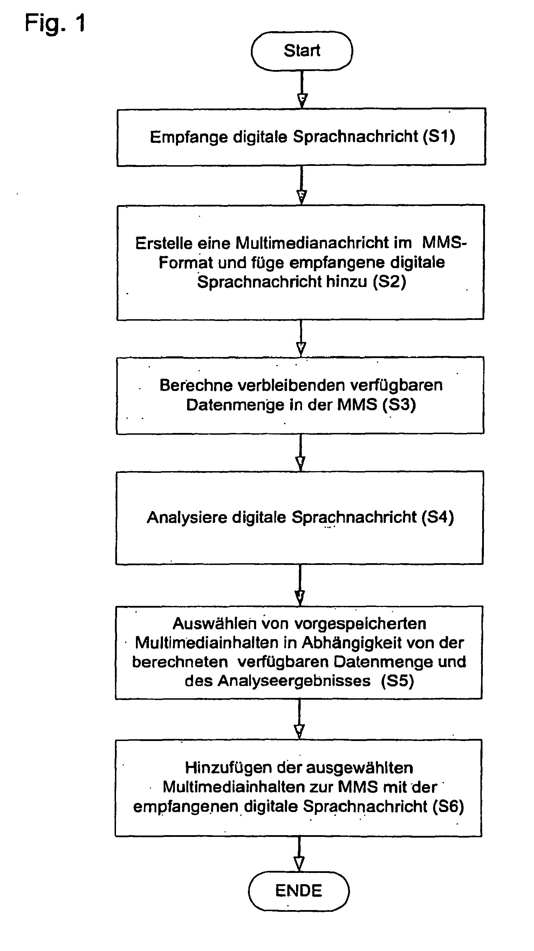

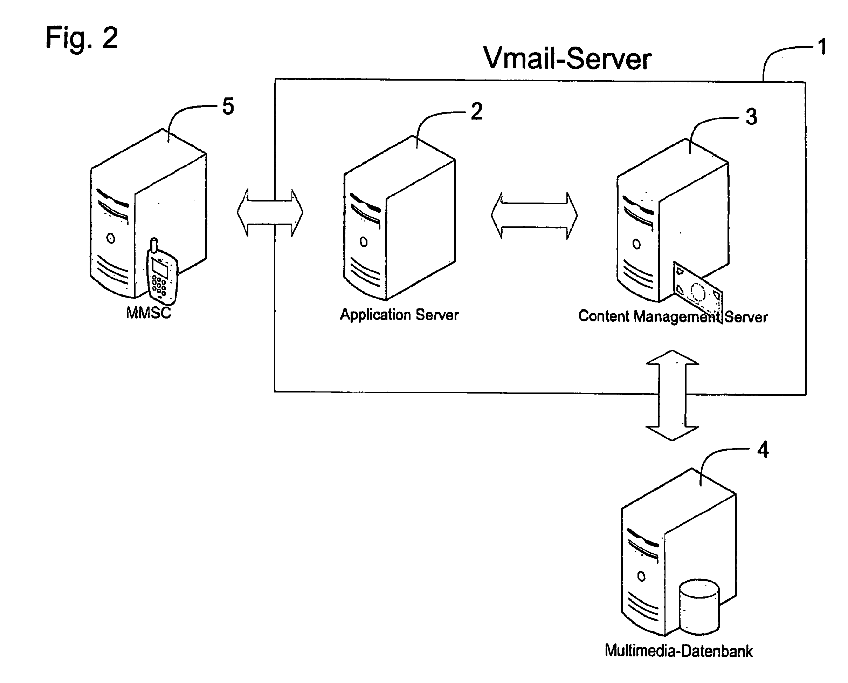

Im folgenden werden bevorzugte Ausführungsbeispiele erläutert, die das Konzept der Erfindung veranschaulichen sollen, ohne dass die Erfindung darauf beschränkt ist. Zunächst wird auf die Figuren 1 und 2 Bezug genommen, in denen ein Verfahren sowie eine Vorrichtung gemäß der vorliegenden Erfindung zum intelligenten Zusammenstellen von unterschiedlichen Multimediainhalten zu einer Multimedianachricht für den digitalen Anrufbeantworterdienst in einem Mobilfunksystem illustriert ist.

Im Schritt S1 des erfindungsgemäßen Verfahrens wird von einem Applikationsserver, der Teil eines Voicemailserver ist, eine digitale Sprachnachricht empfangen und anschließend in eine Bearbeitungsschlange eingefügt.

In einem Schritt S2 wird dann in dem Applikationsserver eine Multimedianachricht entsprechend einer Vorlage erstellt und die empfangene digitale Sprachnachricht dieser Multimedianachricht eingefügt. Hierbei wird beispielsweise das MMS-Format verwendet, das bereits im Mobilfunk der dritten Generation implementiert ist.

Im Schritt S3 berechnet der Applikationsserver die in der Multimedianachricht verbleibende verfügbare Datenmenge, die für weiteren, unterschiedlichen Multimediainhalt zur Verfügung steht. Bei einer Multimedianachricht im MMS-Format ist die Größe auf 300 kB pro MMS begrenzt. Die für neben der eigentlichen digitalen Sprachnachricht zur Verfügung stehende Datenmenge wird durch Subtraktion der Sprachnachrichtengröße von diesen 300 kB berechnet.

Anschließend wird in einem Schritt S4 die digitale Sprachnachricht, die an den Teilnehmer per MMS weitergeleitet werden soll analysiert.

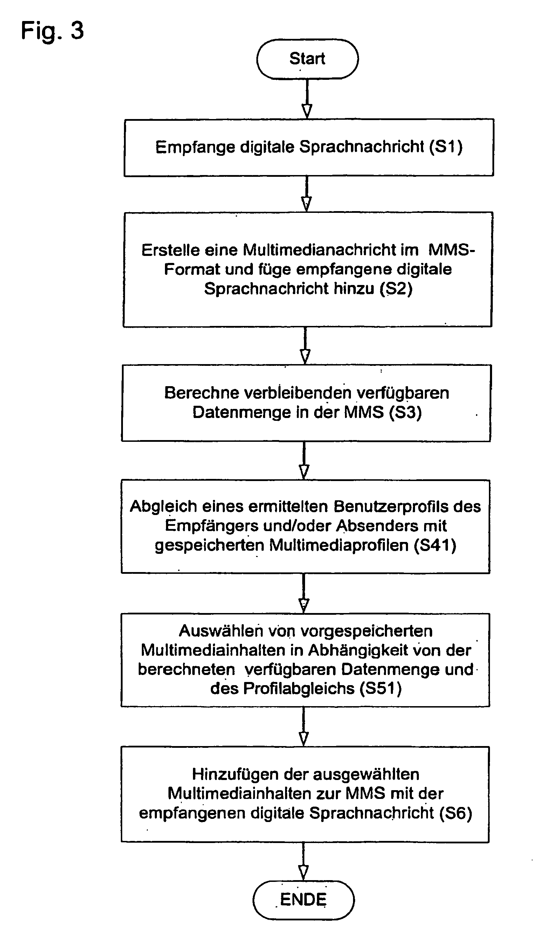

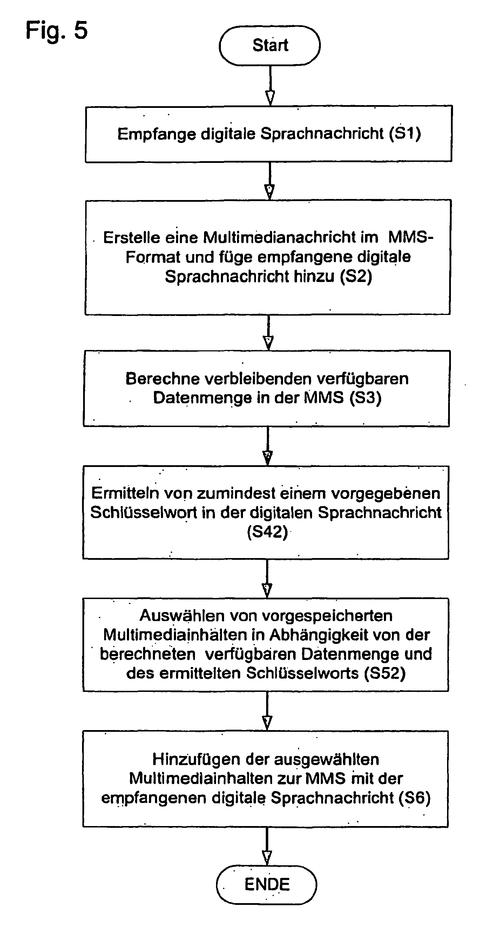

Wie auch im Zusammenhang mit Fig. 3 und 5 später genauer erläutert, gibt es für die Analyse in den Schritt S4 verschiedene Möglichkeiten, die sowohl einzeln als auch in Kombination verwendet werden können.

Eine Möglichkeit ist dabei die Absender bzw. Empfängerdaten zu ermitteln und mit bereits gespeicherten Benutzerprofilen für den jeweiligen Absender bzw. Empfänger abzugleichen. Eine Auswahl von in Datenbanken gespeicherten Profilen von Multimediainhalten erfolgt dann entsprechend dem Profilabgleich.

Beispielsweise enthält das Benutzerprofil des Angerufenen, dass in einer Kundendatenbank des Telefonanbieters gespeichert sein kann, sein Alter, Geschlecht, seinen Tarifvertrag, das Modell seines Mobilfunkgerätes, seinen Wohnort, usw.. Das erfindungsgemäße Verfahren kann beispielsweise aktuelle Nachrichten zum Wohnort des Angerufenen in die MMS integrieren und während des Abhörens der in der MMS enthaltenen Voicemail auf dem Display des Mobilfunkgeräts einblenden. Denkbar wären beispielsweise auch, kommerzielle Angebote zu Nachfolgermodellen des derzeitigen Mobilfunkgerätes des Angerufenen während des Abhörens der in der MMS enthaltenen Voicemail einzublenden. Diese Angebote könnten dann über einen im Mobilfunkgerät integrierten WAP Browser mittels eines Hyperlinks direkt online wahrgenommen werden, was die Benutzerfreundlichkeit des digitalen Anrufbeantworterdienstes weiter steigern würde.

Diese Möglichkeiten, das Benutzerprofil zu verwenden, sind jedoch nur dann verfügbar, wenn der Telefonanbieter auch direkten Zugang zu entsprechenden Benutzerdatenbanken und Profilen hat. Dies ist jedoch, insbesondere bei gehosteten Diensten, nicht immer gegeben.

Eine andere Möglichkeit zum Analysieren der digitalen Sprachnachricht, die durch die vorliegende Erfindung vorgesehen wird, besteht daher darin, die Voicemails nach darin enthaltenen Schlüsselwörtern (Keywords) zu scannen. Die empfangene Voicemail wird dabei nach vorbestimmten Schlüsselwörter unter Verwendung von Spracherkennungstechniken (bspw. ASR) analysiert und der entsprechende, dem ermittelten Schlüsselwörter zugeordnete, in einer Datenbank gespeicherte Multimediainhalt ausgewählt und in die MMS mit der digitalen Sprachnachricht integriert.

Das erfindungsgemäße Verfahren kann bei dieser Keyword-basierten Analyse der Voicemails dann beispielsweise das Keyword "Restaurant" in der Sprachnachricht ermitteln und ein spezielles Angebot einer Restaurantkette oder einen Link zu einem Restaurantführer im Internet einblenden, der über einen integrierten WAP Browser auch gleich direkt zum Online Angebot im Internet führt.

Ist darüber hinaus der Standort des Mobilfunkgerätes bekannt oder ermittelbar, beispielsweise über eine integrierte GPS Funktion oder Abfrage des HLR oder VLR, kann auch eine Liste verfügbarer Restaurants in der nähe des Mobilfunkgerätes eingeblendet werden. Denkbar wäre auch das Einblenden eines Wetterberichts für den Standort des Mobilfunkgerätes, wenn die Analyse der digitalen Sprachnachricht beispielsweise ein Schlüsselwort "Wetter", "Regen", "Sonnenschein", usw. ergeben hat.

Bei der Schlüsselwortanalyse muss überdies nicht die herkömmliche rechen- und zeitintensive automatische Spracherkennung in Echtzeit ("live ASR") verwendet werden, wie sie üblicherweise bei der Sprachsteuerung eingesetzt wird, sondern es kann vorteilhafterweise durch Vorsehen eines Spracherkennungsservers eine Datei basierte Offline-Spracherkennung durchgeführt werden. Dies spart Lizenzgebühren und Rechenzeit und ermöglicht zudem eine bessere Erkennungsrate.

Mit den vorstehend in Zusammenhang mit Fig. 1 beschriebenen erfindungsgemäßen Verfahren ist es für den Telefonanbieter möglich, den in der MMS verbleibenden Platz für zusätzliche Multimediainhalte zu verwenden, die für den mobilen Telefonteilnehmer, der seine Voicemail abhört, von Interesse sein können.

Für den Fachmann ist dabei offensichtlich, dass diese grundsätzliche Idee der vorliegenden Erfindung nicht auf das derzeit standardisierte MMS-Format beschränkt ist, sondern auch in zukünftigen Mobilfunksystemen der vierten und weiteren Generationen angewendet werden kann, um die gleichen Vorteile zu erzielen, wie sie mit der derzeitigen MMS-Technologie erzielbar sind. Dem Fachmann ist ebenso weiterhin klar, dass die verschiedenen beispielhaft dargestellten Analysemöglichkeiten sowohl einzeln als auch kombiniert in dem erfindungsgemäßen Verfahren verwendet werden können. Darüber hinaus bietet die Möglichkeit, den Standort in die Auswahl der Multimediainhalte, die in die MMS integriert werden sollen, mit einzubeziehen, eine vorteilhafte Weiterbildung des erfindungsgemäßen Verfahrens. Auch ein Update der Firmware oder sonstiger Software des Mobilfunkgerätes könnten hier, bei entsprechenden Voreinstellungen, die der Nutzer am Mobilfunkgerät vornehmen kann, zusammen mit den Nutzen des digitalen Anrufbeantworterdienstes per MMS vorgenommen werden, ohne dass der Nutzer dafür extra Anfragen tätigen müsste, was wiederum die Benutzerfreundlichkeit des Mobilfunkgeräts und -systems erhöhen würde.

In Fig. 2 wird eine mögliche Vorrichtung für die Durchführung des Verfahrens nach Fig. 1 dargestellt. Die Vorrichtung enthält dabei einen Voicemailserver 1, der einen Applikationsserver 2 und einen Contentmanagementserver 3 enthält und mit einer Multimediainhaltsdatenbank 4, die vorgespeicherte Multimediainhalte bereitstellt, sowie einem Multimedianachrichtencenter MMSC 5 zum Empfangen und Senden von MMS Nachrichten verbunden ist.

Die Server können als individuelle Rechnereinheiten oder aber als integrierte, aber virtuell (d.h. funktional) getrennte Rechnereinheiten vorgesehen werden.

Im Applikationsserver werden die Voicemail bzw. die digitale Sprachnachricht empfangen und in eine Multimedianachricht im MMS-Format eingefügt, die zuvor im Applikationsserver 2 erstellt worden ist. Die MMS-Voicemail wird anschließend in eine Liste eingefügt, die von dem Contentmanagmentserver 3, der mit dem Applikationsserver 2 verbunden ist, abgearbeitet wird. Der Contentmanagementserver 3 empfängt bzw. extrahiert die MMS aus der Liste und berechnet den für weiteren Multimediainhalt verbleibenden Platz. Des weiteren analysiert der Contentmanagementserver 3 die digitale Sprachnachricht und wählt anschließend aus der angeschlossenen Multimediainhalts-Datenbank 4 den entsprechenden Multimediainhalt in Abhängigkeit von der noch in der MMS verfügbaren Datenmenge und der analysierten Sprachnachricht aus. Der ausgewählte Multimediainhalt wird zu der MMS mit der empfangenen digitalen Sprachnachricht hinzugefügt und über das Multimedianachrichtencenter 5 an den Empfänger verschickt.

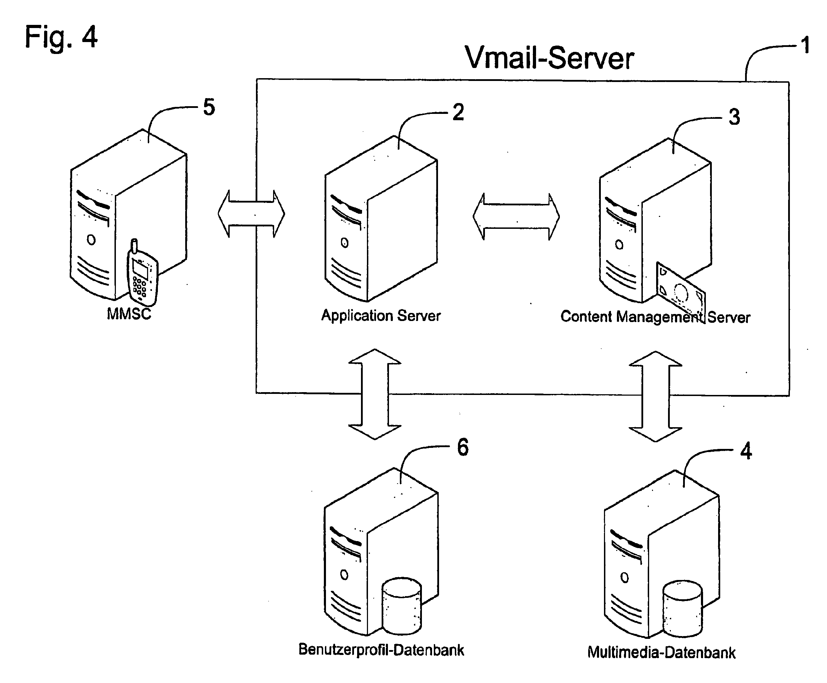

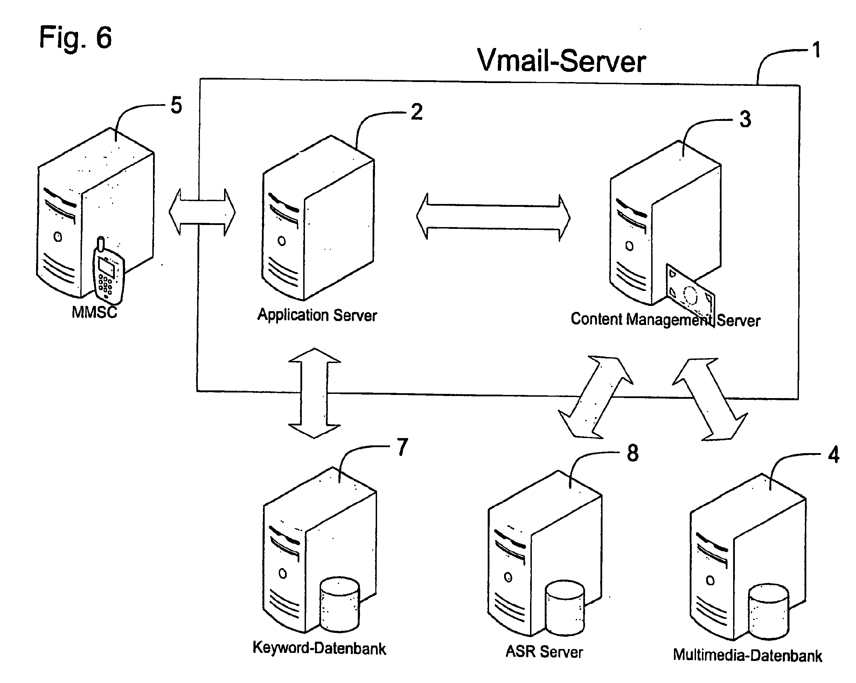

Die Figuren 4 und 6 zeigen jeweils Modifikationen der in Fig. 2 dargestellten Vorrichtung, die die zuvor erwähnten Verfahren mit den unterschiedlichen Möglichkeiten der Sprachnachrichtenanalyse, die nachfolgend im Zusammenhang mit den Figuren 3 und 5 erläutert werden, ermöglichen.

Fig. 4 zeigt eine weitere Ausführungsform der erfindungsgemäßen Vorrichtung gemäß Fig. 2 zum Durchführen einer weiteren Ausführungsform des in Fig. 1 gezeigten erfindungsgemäßen Verfahrens gemäß Fig. 3.

Die in Fig. 4 gezeigte Vorrichtung zum intelligenten Zusammenstellen einer Multimedianachricht zur Versendung in einem Mobilfunksystem, das einen Abgleich eines ermittelten Benutzerprofils des Empfängers und/oder Absenders mit vorgespeicherten Multimediaprofilen ermöglicht, enthält zusätzlich zu den Elementen der Vorrichtung gemäß Fig. 2 eine Datenbank 6 mit darin gespeicherten Benutzerprofilen, die mit dem Contentmanagementserver 3 verbunden ist. Alternativ kann diese Datenbank 6 zusätzlich oder alternativ mit dem Applikationsserver verbunden sein.

Bei dem Verfahren gemäß Fig. 3 wird zunächst, genau wie bei dem Verfahren gemäß Fig. 1, eine digitale Sprachnachricht bzw. Voicemail von dem Applikationsserver empfangen. Die empfangene Voicemail kann gegebenenfalls anschließend in das AMR-Format zur weiteren Verarbeitung konvertiert. Der Applikationsserver 2 wählt dann ein MMS-Template aus und fügt die empfangene digitale Sprachnachricht in dieses MMS-Template ein. Die Voicemail wird anschließend in eine Bearbeitungsliste zur Weiterverarbeitung eingefügt. Der Contentmanagementserver 3 extrahiert dann die erstellte MMS-Nachricht der digitalen Sprachnachricht aus dieser Liste und berechnet den für zusätzlichen Multimediainhalt verfügbaren Platz. Dieser ermittelt sich aus der vorgegebenen Obergrenze für Multimedianachrichten, die bei dem standardisierten MMS-Format 300 kB ist, von der die Größe der digitalen Sprachnachricht im AMR-Format subtrahiert wird.

Des weiteren analysiert der Contentmanagementserver 3 die digitale Sprachnachricht hinsichtlich des Absenders bzw. des Empfängers und ermittelt die dazu entsprechenden Benutzerprofile, die in einer Datenbank 6 mit Kundendaten abgespeichert sind (S41). Der Contentmanagementserver 3 führt dann einen Abgleich der ermittelten Benutzerprofile mit Multimediaprofilen, die in einer Multimediadatenbank gespeichert sind, und wählt die Profile mit der größten Übereinstimmung. Der Contentmanagementserver 3 erhält daraufhin eine Liste mit möglichen Multimediainhalt und wählt daraus in Abhängigkeit von der verbleibenden verfügbaren Datenmenge in der Multimedianachricht einen geeigneten Multimediainhalt aus (S51). Der so ausgewählte Multimediainhalt wird dann direkt in die MMS mit der digitalen Sprachnachricht eingefügt und so eine Multimedianachricht zusammengestellt, die zum Versenden an einen Mobilfunkteilnehmer über den Multimedianachrichtencenter 5 gesendet wird.

Fig. 6 zeigt eine weitere Ausführungsform der erfindungsgemäßen Vorrichtung gemäß Fig. 2 zum Durchführen einer weiteren Ausführungsform des in Fig. 1 gezeigten erfindungsgemäßen Verfahrens gemäß Fig. 5.

Fig. 6 weist zusätzlich zu den in Fig. 2 dargestellten Vorrichtungselementen zusätzlich eine Schlüsselwortdatenbank 7 und, die mit dem Applikationsserver 2 verbunden ist, sowie einen Server zur automatischen Spracherkennung, im Folgenden ASR-Server 8, auf, der mit dem Contentmanagementserver 3 verbunden ist. Alternativ oder zusätzlich kann dieser ASR-Server 8 auch mit dem Applikationsserver 2 verbunden sein.

Bei dem Verfahren gemäß Fig. 5 wird zunächst, genau wie bei dem Verfahren gemäß Fig. 1, eine digitale Sprachnachricht von dem Applikationsserver 2 empfangen und gegebenenfalls in ein AMR-Format konvertiert. Anschließend wird eine leere Multimedianachricht erstellt und die empfangene digitale Sprachnachricht in diese Multimedianachricht eingefügt. Anschließend wird die verbleibende verfügbare Datenmenge in der Multimedianachricht berechnet.

Der Contentmanagementserver 3 empfängt anschließend eine Liste mit Schlüsselwörtern aus der Schlüsselwortdatenbank. Die so empfangenen Schlüsselwörter werden dem ARS-Server 8 zur Verfügung gestellt, der die digitale Sprachnachricht nach den vorgegebenen Schlüsselwörtern aus der Liste scannt. Das Ergebnis dieses Scannens wird dann durch den ASR-Server an den Contentmanagementserver 3 zurückgeliefert, der daraufhin eine Liste mit zu diesen Schlüsselwörtern passenden Multimediainhalt liefert (S 42). Der Contentmanagementserver 3 wählt dann in Abhängigkeit von der verbleibenden verfügbaren Datenmenge in der Multimedianachricht einen geeigneten Multimediainhalt aus und leitet ihn an den Applikationsserver 2 weiter (S52). Der Applikationsserver 2 fügt dann die ausgewählten Multimediainhalte zu der Multimedianachricht mit der digitalen Sprachnachricht hinzu, die dann über das Multimedianachrichtencenter 5 an den jeweiligen Mobilfunkempfänger gesendet wird.

Ist gemäß der oben erwähnten alternativen Anordnung der ASR-Server an dem Applikationsserver 2 angebunden, wird dadurch die Arbeitsweise nicht wesentlich verändert, nur dass der Applikationsserver 2 dann vorher die Schlüsselwörter vom Contentmanagementserver 3 laden muss, um sie dann dem ASR-Server zur Verfügung zu stellen.

Mit der vorliegenden Erfindung wird daher ein Verfahren und eine Vorrichtung zum intelligenten Zusammenstellen einer Multimedianachricht für den Mobilfunksystem geschaffen. Dabei wird in Abhängigkeit von dem verfügbaren Platz in der Multimedianachricht sowie von einer Analyse, die beispielsweise Benutzerprofile aus Kundendatenbanken oder eine Schlüsselwortanalyse mittels Spracherkennung (in Echtzeit oder Offline) verwendet, ausgewählt, so dass ein Nutzer des digitalen Anrufbeantworterdienstes parallel zum Abspielen seiner digitalen Sprachnachricht ihn interessierenden visuellen oder audiovisuellen Multimediainhalt aufnehmen kann.

Ferner können bei vorteilhaften Weiterbildungen der vorliegenden Erfindung die beispielhaft erwähnten Analysemöglichkeiten der empfangenen Voicemails auch kombiniert werden.

Weitere vorteilhafte Ausführungsformen der vorliegenden Erfindung können zusätzlich auch den momentanen Standort sowie das Mobilfunkgerätemodell bei dem Auswählen von geeigneten Multimediainhalt berücksichtigen.

## Patentansprüche

1. Verfahren zum intelligenten Zusammenstellen einer Multimedianachricht für ein Mobilfunksystem mit folgenden Schritten:
a.) Empfangen einer digitalen Sprachnachricht von einem digitalen Anrufbeantworterdienst (S1);
b.) Erstellen einer leeren Multimedianachricht und Hinzufügen der empfangenen digitalen Sprachnachricht (S2);
c.) Berechnen der verbleibenden verfügbaren Datenmenge in der Multimedianachricht (S3);
d.) Analysieren der digitalen Sprachnachricht (S4);
e.) Auswählen von gespeicherten Multimediainhalten in Abhängigkeit von der verbleibenden verfügbaren Datenmenge in der Multimedianachricht und des Analyseergebnisses (S5): und
f.) Hinzufügen der ausgewählten Multimediainhalten zur Multimedianachricht mit der empfangenen digitalen Sprachnachricht (S6)

2. Verfahren zum intelligenten Zusammenstellen einer Multimedianachricht für ein Mobilfunksystem gemäß Anspruch 1 bei dem ferner der Schritt des Analysierens der digitalen Sprachnachricht einen Abgleich eines ermittelten Benutzerprofils des Empfängers und/oder Absenders mit gespeicherten Multimediaprofilen aufweist (41).

3. Verfahren zum intelligenten Zusammenstellen einer Multimedianachricht für ein Mobilfunksystem gemäß Anspruch 1 bei dem ferner der Schritt des Analysierens der digitalen Sprachnachricht ein Ermitteln von zumindest einem vorgegebenen Schlüsselwort in der digitalen Sprachnachricht aufweist (S42).

4. Verfahren zum intelligenten Zusammenstellen einer Multimedianachricht für ein Mobilfunksystem gemäß Anspruch 3 bei dem ferner die Ermittelung des zumindest einen Schlüsselworts mittels automatischer Spracherkennung erfolgt.

5. Verfahren zum intelligenten Zusammenstellen einer Multimedianachricht für ein Mobilfunksystem gemäß Anspruch 3 oder 4 bei dem ferner die automatischen Spracherkennung in Echtzeit erfolgt.

6. Verfahren zum intelligenten Zusammenstellen einer Multimedianachricht für ein Mobilfunksystem gemäß Anspruch 3 oder 4 bei dem ferner die automatischen Spracherkennung offline erfolgt.

7. Verfahren zum intelligenten Zusammenstellen einer Multimedianachricht für ein Mobilfunksystem gemäß einem der vorhergehenden Ansprüche 1 bis 6, bei dem der Schritt des Auswählens zusätzlich in Abhängigkeit vom Standort eines Mobilfunkgeräts erfolgt.

8. Vorrichtung zum intelligenten Zusammenstellen einer Multimedianachricht für ein Mobilfunksystem aufweisend:
a.) Mittel zum Empfangen einer digitale Sprachnachricht von einem digitalen Anrufbeantworterdienst;
b.) Mittel zum Erstellen einer leeren Multimedianachricht und Hinzufügen der empfangenen digitale Sprachnachricht;
c.) Mittel zum Berechnen der verbleibenden verfügbaren Datenmenge in der Multimedianachricht;
d.) Mittel zum Analysieren der digitalen Sprachnachricht;
e.) Mittel zum Auswählen von gespeicherten Multimediainhalten in Abhängigkeit von der verbleibenden verfügbaren Datenmenge in der Multimedianachricht und des Analyseergebnisses;
f.) Mittel zum Hinzufügen der ausgewählten Multimediainhalten zur Multimedianachricht mit der empfangenen digitalen Sprachnachricht.

9. Vorrichtung zum intelligenten Zusammenstellen einer Multimedianachricht für ein Mobilfunksystem gemäß Anspruch 8, wobei die Mittel zum Analysieren ferner Mittel aufweisen, die derart aufgebaut sind, dass sie einen Abgleich eines ermittelten Benutzerprofils des Empfängers und/oder Absenders mit gespeicherten Multimediaprofilen vorsehen.

10. Vorrichtung zum intelligenten Zusammenstellen einer Multimedianachricht für ein Mobilfunksystem gemäß Anspruch 8, wobei die Mittel zum Analysieren ferner Mittel aufweisen, die derart aufgebaut sind, dass sie die Ermittelung von zumindest einem vorgegebenen Schlüsselwort in der digitalen Sprachnachricht vorsehen.

11. Vorrichtung zum intelligenten Zusammenstellen einer Multimedianachricht für ein Mobilfunksystem gemäß Anspruch 10, wobei die Mittel zur Ermittelung des zumindest einen Schlüsselworts derart aufgebaut sind, dass die Ermittelung des zumindest einen Schlüsselworts mittels automatischer Spracherkennung erfolgt

12. Vorrichtung zum intelligenten Zusammenstellen einer Multimedianachricht für ein Mobilfunksystem gemäß Anspruch 10 oder 11, wobei die Mittel zur Ermittelung des zumindest einen Schlüsselworts derart aufgebaut sind, dass die automatischer Spracherkennung in Echtzeit erfolgt.

13. Vorrichtung zum intelligenten Zusammenstellen einer Multimedianachricht für ein Mobilfunksystem gemäß Anspruch 10 oder 11, wobei die Mittel zur Ermittelung des zumindest einen Schlüsselworts derart aufgebaut sind, dass die automatischer Spracherkennung offline erfolgt.

14. Vorrichtung zum intelligenten Zusammenstellen einer Multimedianachricht für ein Mobilfunksystem gemäß einem der vorhergehenden Ansprüche 8 bis 13, wobei die Mittel zum Auswählen der Schritt des Analysierens sind, dass sie den Multimediainhalt zusätzlich in Abhängigkeit vom Standort eines Mobilfunkgeräts auswählen.

## Claims

1. A method for intelligently composing a multimedia message for a mobile radio system, including the following steps:
a.) receiving a digital voice message from a digital answering service (S1);
b.) generating a blank multimedia message and adding the received digital voice message (S2);
c.) calculating the remaining available amount of data in the multimedia message (S3);
d.) analyzing the digital voice message (S4);
e.) selecting stored multimedia contents in dependence on the remaining available amount of data in the multimedia message and the analysis result (S5): and
f.) adding the selected multimedia contents to the multimedia message including the received digital voice message (S6)

2. The method for intelligently composing a multimedia message for a mobile radio system according to claim 1, wherein the step of analyzing the digital voice message further includes matching a determined user profile of the recipient and/or sender to stored multimedia profiles (41).

3. The method for intelligently composing a multimedia message for a mobile radio system according to claim 1, wherein the step of analyzing the digital voice message further includes determining at least one predetermined keyword in the digital voice message (S42).

4. The method for intelligently composing a multimedia message for a mobile radio system according to claim 3, wherein the determination of the at least one keyword furthermore takes place by means of automatic speech recognition.

5. The method for intelligently composing a multimedia message for a mobile radio system according to claim 3 or 4, wherein the automatic speech recognition furthermore takes place in real time.

6. The method for intelligently composing a multimedia message for a mobile radio system according to claim 3 or 4, wherein the automatic speech recognition furthermore takes place off-line.

7. The method for intelligently composing a multimedia message for a mobile radio system according to any one of the preceding claims 1 to 6, wherein the step of selecting additionally takes place in dependence on the position of a mobile radio set.

8. An apparatus for intelligently composing a multimedia message for a mobile radio system, comprising:
a.) means for receiving a digital voice message from a digital answering service;
b.) means for generating a blank multimedia message and adding a received digital voice message;
c.) means for calculating the remaining available amount of data in the multimedia message;
d.) means for analyzing the digital voice message;
e.) means for selecting stored multimedia contents in dependence on the remaining available amount of data in the multimedia message and the analysis result;
f.) means for adding the selected multimedia contents to the multimedia message including the received digital voice message.

9. The apparatus for intelligently composing a multimedia message for a mobile radio system according to claim 8, wherein the means for analyzing further comprise means that are configured to provide a match of a determined user profile of the recipient and/or sender with stored multimedia profiles.

10. The apparatus for intelligently composing a multimedia message for a mobile radio system according to claim 8, wherein the means for analyzing further comprise means that are configured to provide the determination of at least one predetermined keyword in the digital voice message.

11. The apparatus for intelligently composing a multimedia message for a mobile radio system according to claim 10, wherein the means for determining the at least one keyword are configured such that the determination of the at least one keywords takes place by means of automatic speech recognition.

12. The apparatus for intelligently composing a multimedia message for a mobile radio system according to claim 10 or 11, wherein the means for determining the at least one keyword are configured such that the automatic speech recognition takes place in real time.

13. The apparatus for intelligently composing a multimedia message for a mobile radio system according to claim 10 or 11, wherein the means for determining the at least one keyword are configured such that the automatic speech recognition takes place off-line.

14. The apparatus for intelligently composing a multimedia message for a mobile radio system according to any one of the preceding claims 8 to 13, wherein the means for selecting the analyzing step are configured to additionally select the multimedia content in dependence on the position of a mobile radio set.

## Revendications

1. Procédé de composition intelligente d'un message multimédia pour un système de téléphonie mobile, comprenant les étapes suivantes :
a.) réception d'un message vocal numérique d'un service de répondeur téléphonique numérique (S1) ;
b.) création d'un message multimédia vide et insertion du message vocal numérique (S2) reçu ;
c.) calcul de la quantité de données disponible restante dans le message multimédia (S3) ;
d.) analyse du message vocal numérique (S4) ;
e.) sélection de contenus multimédia mémorisés en fonction de la quantité de données disponible restante dans le message multimédia et du résultat de l'analyse (S5), et
f.) ajout des contenus multimédia sélectionnés au message multimédia avec le message vocal numérique (S6) reçu.

2. Procédé de composition intelligente d'un message multimédia pour un système de téléphonie mobile selon la revendication 1, où l'étape d'analyse du message vocal numérique comprend en outre l'harmonisation d'un profil d'utilisateur déterminé pour le récepteur et/ou l'émetteur avec des profils multimédia sélectionnés (41).

3. Procédé de composition intelligente d'un message multimédia pour un système de téléphonie mobile selon la revendication 1, où l'étape d'analyse du message vocal numérique comprend en outre la détection d'au moins un mot-clé défini dans le message vocal numérique (S42).

4. Procédé de composition intelligente d'un message multimédia pour un système de téléphonie mobile selon la revendication 3, où la détection du ou des mots-clés est en outre effectuée par reconnaissance vocale automatique.

5. Procédé de composition intelligente d'un message multimédia pour un système de téléphonie mobile selon la revendication 3 ou 4, où la reconnaissance vocale automatique est en outre effectuée en temps réel.

6. Procédé de composition intelligente d'un message multimédia pour un système de téléphonie mobile selon la revendication 3 ou 4, où la reconnaissance vocale automatique est en outre effectuée off-line.

7. Procédé de composition intelligente d'un message multimédia pour un système de téléphonie mobile selon l'une des revendications 1 à 6, où l'étape de sélection est en outre effectuée en fonction de la localisation d'un téléphone cellulaire.

8. Dispositif pour la composition intelligente d'un message multimédia pour un système de téléphonie mobile, comportant :
a.) des moyens pour la réception d'un message vocal numérique d'un service de répondeur téléphonique numérique ;
b.) des moyens pour la création d'un message multimédia vide et l'insertion d'un message vocal numérique reçu ;
c.) des moyens pour le calcul de la quantité de données disponible restante dans le message multimédia ;
d.) des moyens pour l'analyse du message vocal numérique ;
e.) des moyens pour la sélection de contenus multimédia mémorisés en fonction de la quantité de données disponible restante dans le message multimédia et du résultat de l'analyse ;
f.) des moyens pour l'ajout des contenus multimédia sélectionnés au message multimédia avec le message vocal numérique reçu.

9. Dispositif pour la composition intelligente d'un message multimédia pour un système de téléphonie mobile selon la revendication 8, où les moyens pour l'analyse comprennent en outre des moyens réalisés de manière à prévoir l'harmonisation d'un profil d'utilisateur déterminé pour le récepteur et/ou l'émetteur avec des profils multimédia sélectionnés.

10. Dispositif pour la composition intelligente d'un message multimédia pour un système de téléphonie mobile selon la revendication 8, où les moyens pour l'analyse comprennent en outre des moyens réalisés de manière à prévoir la détection d'au moins un mot-clé défini dans le message vocal numérique.

11. Dispositif pour la composition intelligente d'un message multimédia pour un système de téléphonie mobile selon la revendication 10, où les moyens pour la détection du ou des mots-clés sont réalisés de telle manière que la détection du ou des mots-clés est effectuée par reconnaissance vocale automatique.

12. Dispositif pour la composition intelligente d'un message multimédia pour un système de téléphonie mobile selon la revendication 10 ou 11, où les moyens pour la détection du ou des mots-clés sont réalisés de telle manière que la reconnaissance vocale automatique est effectuée en temps réel.

13. Dispositif pour la composition intelligente d'un message multimédia pour un système de téléphonie mobile selon la revendication 10 ou 11, où les moyens pour la détection du ou des mots-clés sont réalisés de telle manière que la reconnaissance vocale automatique est effectuée off-line.

14. Dispositif pour la composition intelligente d'un message multimédia pour un système de téléphonie mobile selon l'une des revendications 8 à 13, où les moyens de sélection de l'étape d'analyse sélectionnent en outre le contenu multimédia en fonction de la localisation d'un téléphone cellulaire.
